(19) Europäisches Patentamt
European Patent Office
Office européen des brevets

(11) **EP 4 633 032 A1**

(12) **EUROPEAN PATENT APPLICATION**

(43) Date of publication:
**15.10.2025 Bulletin 2025/42**

(21) Application number: **25169164.8**

(22) Date of filing: **08.04.2025**

(51) International Patent Classification (IPC):
**H02M 7/487** (2007.01)    **H02M 7/5395** (2006.01)
**H02M 7/5387** (2007.01)    **H02M 1/00** (2006.01)
**H02J 3/38** (2006.01)    **H02M 3/10** (2006.01)

(52) Cooperative Patent Classification (CPC):
**H02M 1/007; H02J 3/381; H02M 7/487;
H02M 7/53871; H02M 7/5395;** H02J 2300/24;
H02M 3/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.04.2024 CN 202410430382**

(71) Applicant: **Huawei Digital Power Technologies
Co., Ltd.
Futian District,
Shenzhen,
Guangdong 518043 (CN)**

(72) Inventors:
• **Du, Yi
Shenzhen, 518043 (CN)**
• **Yu, Xinyu
Shenzhen, 518043 (CN)**
• **Xin, Kai
Shenzhen, 518043 (CN)**

(74) Representative: **Epping - Hermann - Fischer
Patentanwaltsgesellschaft mbH
Schloßschmidstraße 5
80639 München (DE)**

(54) **POWER CONVERTER AND INVERTER CIRCUIT CONTROL METHOD**

(57)    A power converter and an inverter circuit control method are provided. A modulation signal is output in a bipolar modulation scheme near a zero-crossing point of the modulation signal of an inverter circuit, to prevent some modulation signals from being lost due to reasons such as minimum on time and dead time of a switching transistor in the inverter circuit, and further prevent an output voltage of the inverter circuit from being distorted near the zero-crossing point. When a three-phase inverter circuit performs discontinuous pulse width modulation, a zero-crossing interval is prolonged, and distortion of the output voltage of the inverter circuit is more obvious. In this case, quality of electric energy can be better improved by outputting the modulation signal in the bipolar modulation scheme.

FIG. 7b

**Description**

**TECHNICAL FIELD**

This application relates to the field of power electronic technologies, and in particular, to a power converter and an inverter circuit control method.

**BACKGROUND**

Power converters are used in fields such as communication, automotive electronics, a power grid, and a new energy vehicle. The power converter is an apparatus that can convert a direct current into an alternating current or convert an alternating current into a direct current.

For example, an inverter widely used in the field of new energy power generation may be configured to convert a direct current into an alternating current and output the alternating current to an alternating current load. Turning on and off of a switching transistor, limited by a property of the switching transistor in the inverter, are limited by dead time or minimum on time. When a modulation signal is small, for example, near a zero-crossing point of the modulation signal, the modulation signal may be lost. Therefore, how to prevent the loss of the modulation signal and improve quality of electric energy output by the inverter is an urgent problem to be resolved.

**SUMMARY**

This application provides a power converter and an inverter circuit control method, to prevent a modulation signal from being lost at a zero-crossing point, and improve power output efficiency of the power converter and quality of electric energy.

According to a first aspect, this application provides a power converter, including a controller and an inverter circuit. The inverter circuit includes at least two three-level inverter bridge arms, and the controller is configured to separately input modulation signals to the at least two three-level inverter bridge arms, so that the inverter circuit converts a received direct current into an alternating current and outputs the alternating current to a load. When an absolute value of the modulation signal is greater than a first threshold, the modulation signal is a unipolar modulation signal. When the absolute value of the modulation signal is less than or equal to a second threshold, the modulation signal is a bipolar modulation signal. The first threshold is greater than or equal to the second threshold.

Bipolar modulation is used when the absolute value of the modulation signal is small, to effectively prevent the modulation signal from being lost, avoid distortion of a waveform of the output alternating current, and improve quality of electric energy.

In a possible implementation, the first threshold is greater than the second threshold. Within any half modulation period of the modulation signal, if the absolute value of the modulation signal is greater than the first threshold in a first time period, and the absolute value of the modulation signal is less than or equal to the first threshold and greater than or equal to the second threshold in a second time period, the modulation signal is a unipolar modulation signal, where the second time period is a time period that is after the first time period and that is adjacent to the first time period. Alternatively, within any half modulation period of the modulation signal, if the absolute value of the modulation signal is less than the second threshold in a first time period, and the absolute value of the modulation signal is greater than or equal to the second threshold and less than or equal to the first threshold in a second time period, the modulation signal is a bipolar modulation signal, where the second time period is a time period that is after the first time period and that is adjacent to the first time period.

In a possible implementation, the modulation signal is an SPWM signal or an SVPWM signal.

In a possible implementation, the inverter circuit is a three-phase inverter circuit, and the modulation signal is a DPWM signal.

According to a second aspect, this application provides an inverter circuit control method. A modulation signal is input to an inverter circuit, to control the inverter circuit to convert a received direct current into an alternating current and output the alternating current to a load. When an absolute value of the modulation signal is greater than a first threshold, the modulation signal is controlled to be a unipolar modulation signal. When the absolute value of the modulation signal is less than or equal to a second threshold, the modulation signal is controlled to be a bipolar modulation signal. The first threshold is greater than or equal to the second threshold.

In a possible implementation, the first threshold is greater than the second threshold. Within any half modulation period of the modulation signal, if the absolute value of the modulation signal is greater than the first threshold in a first time period, and the absolute value of the modulation signal is less than or equal to the first threshold and greater than or equal to the second threshold in a second time period, the modulation signal is controlled to be a unipolar modulation signal, where the second time period is a time period that is after the first time period and that is adjacent to the first time period.

Alternatively, within any half modulation period of the modulation signal, if the absolute value of the modulation signal is less than the second threshold in a first time period, and the absolute value of the modulation signal is greater than or equal to the second threshold and less than or equal to the first threshold in a second time period, the modulation signal is controlled to be a bipolar modulation signal, where the second time period is a time period that is after the first time period and that is adjacent to the first time period.

In a possible implementation, the modulation signal is an SPWM signal or an SVPWM signal.

The inverter circuit is a three-phase inverter circuit, and the modulation signal is a DPWM signal.

It should be understood that mutual reference may be made to the implementations and beneficial effect of the foregoing aspects of this application.

## BRIEF DESCRIPTION OF DRAWINGS

FIG. 1a to FIG. 1c are diagrams of application scenarios of an inverter according to an embodiment of this application;

FIG. 2a to FIG. 2c are diagrams of structures of three-level inverter circuits according to an embodiment of this application;

FIG. 3a to FIG. 3c are diagrams of three types of unipolar modulation signals of an inverter circuit according to an embodiment of this application;

FIG. 4a to FIG. 4c are diagrams of a unipolar modulation scheme and modulation effect according to an embodiment of this application;

FIG. 5 is a diagram of a principle of a loss of a unipolar modulation signal and unipolar modulation effect according to an embodiment of this application;

FIG. 6a to FIG. 6c are diagrams of a bipolar modulation scheme according to an embodiment of this application;

FIG. 7a and FIG. 7b are diagrams of equivalent principles of a unipolar modulation scheme and a bipolar modulation scheme according to an embodiment of this application;

FIG. 8a to FIG. 8c are diagrams of a bipolar modulation scheme and modulation effect according to an embodiment of this application; and

FIG. 9 is a diagram of a bipolar modulation control mode according to an embodiment of this application.

## DE SCRIPTION OF EMBODIMENTS

To make objectives, features and advantages of this application more comprehensible, this application is further illustrated in detail in the following with reference to accompanying drawings and specific implementations.

The "one embodiment" or the "embodiment" herein refers to a specific feature, structure, or characteristic that may be included in at least one implementation of this application. "In one embodiment" appearing in different places in this specification does not refer to a same embodiment, and is not a separate or selective embodiment that is mutually exclusive with another embodiment. Unless otherwise specified, in this specification, the words "connect", "connecting", and "connection" that indicate an electrical connection all indicate direct or indirect electrical connection.

The following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

The technical solutions provided in embodiments of this application may be applied to a device having an inverter circuit topology, for example, an inverter or an uninterruptible power supply (Uninterruptible Power Supply, UPS), and may be applied to different application scenarios, for example, a photovoltaic power supply scenario, an energy storage power supply scenario, and a UPS power supply scenario.

To facilitate understanding of the technical solutions provided in embodiments of this application, the following describes specific application of the technical solutions provided in embodiments of this application by selecting one of the scenarios.

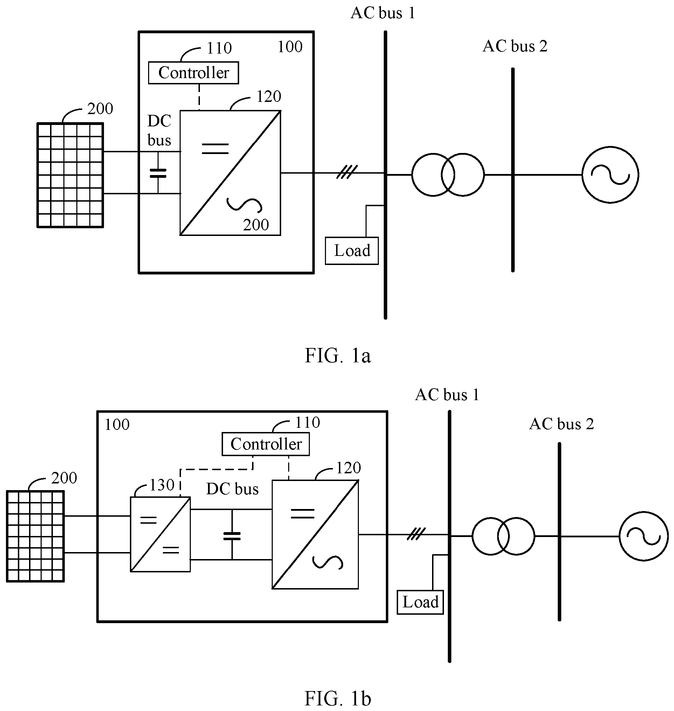

FIG. 1a to FIG. 1c are diagrams of application scenarios of a photovoltaic system according to an embodiment of this application. Each photovoltaic system provided in embodiments of this application includes one photovoltaic string 200. The photovoltaic string 200 may be one or more strings, and one photovoltaic string is obtained by connecting one or more photovoltaic panels in series or in parallel. The photovoltaic string 200 is configured to convert received light energy into electric energy in a direct current form in a light condition, and transmit the electric energy to an inverter 100. The inverter 100 is configured to convert, into an alternating current, the direct current that is input by the photovoltaic string 200, and output the alternating current to a load. It should be understood that the load may be broadly a power grid, or may be a power-consuming device, an energy storage device, or the like. The inverter 100 provided in embodiments of this application may be separately connected to the power-consuming device, the energy storage device, and the like, or may be separately connected to the power grid, or may be connected to all of the power grid, the power-consuming device, the energy storage device, and the like. In the application scenarios of the inverter 100 shown in FIG. 1a to FIG. 1c, an output end of the inverter 100 is directly connected to the power-consuming device, the energy storage device, and the like (namely, a load shown in the figure), is connected to a transformer through an AC bus 1, is connected to an AC bus 2 after being boosted by using the transformer, and then is connected to a large power grid.

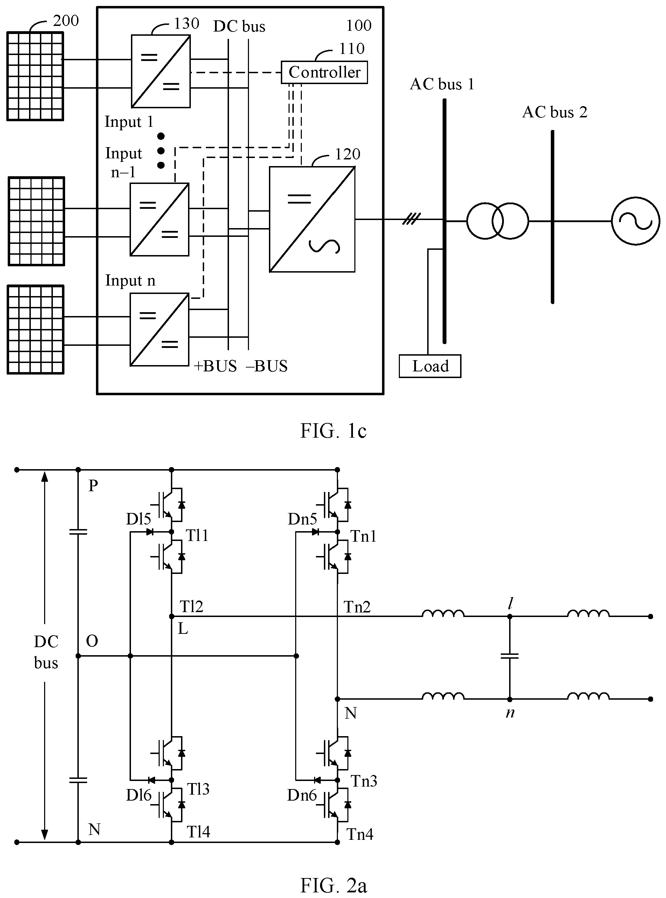

As shown in FIG. 1a, in a possible implementation, an inverter circuit 120 in the inverter 100 is directly connected to the photovoltaic string 200 through a DC bus. This is a single-stage architecture inverter 100. As shown in FIG. 1b and FIG. 1c, the inverter circuit 120 in the inverter 100 may alternatively be first connected to a direct current conversion circuit 130 through a DC bus, and then connected to the photovoltaic string 200. This is a two-stage architecture inverter 100.

In a possible implementation, an input end of the inverter 100 may be connected to a plurality of photovoltaic strings 200 (as shown in FIG. 1c). A photovoltaic panel of the photovoltaic string 200 may be connected to a photovoltaic optimizer, and the photovoltaic optimizer is configured to improve overall power generation efficiency of the photovoltaic system (not shown in the figure).

Still refer to FIG. 1a to FIG. 1c. When the inverter 100 works normally, a controller 110 inputs a modulation signal to an inverter bridge arm in the inverter circuit 120, to specifically drive a switching transistor on the inverter bridge arm in the inverter circuit 120 to be turned on or off. In this way, the inverter circuit 120 converts the received direct current into the alternating current and outputs the alternating current to the load.

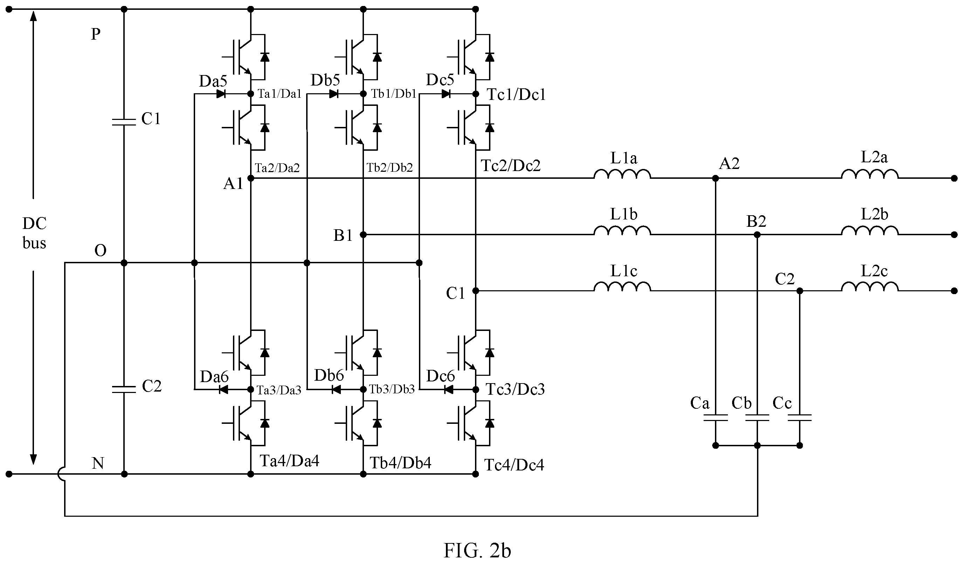

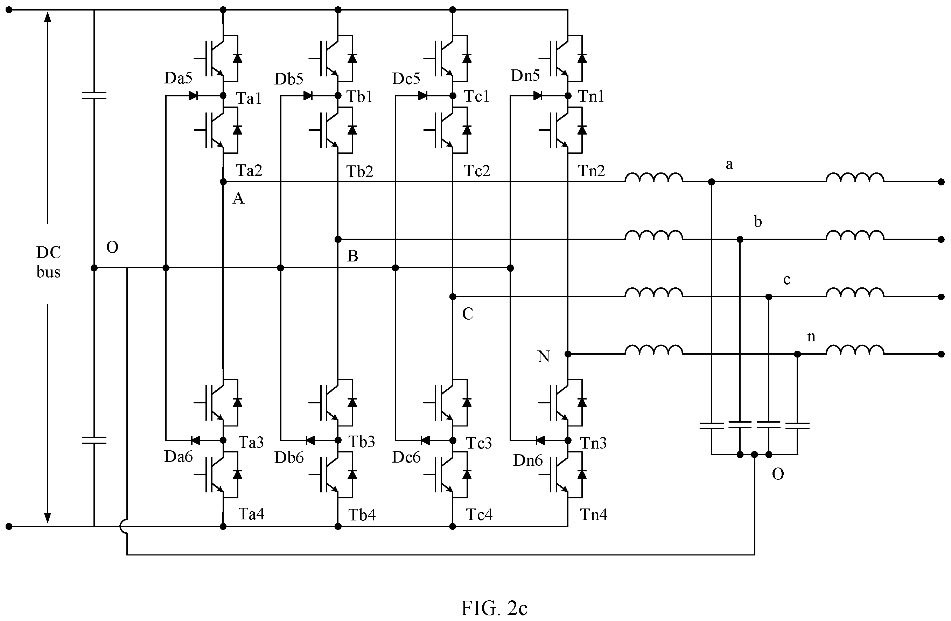

In an embodiment, the inverter circuit 120 may use a three-level inverter circuit topology shown in FIG. 2a to FIG. 2c. FIG. 2a shows a single-phase three-level inverter circuit, including a bridge arm including a switching transistor T11, a switching transistor T12, a switching transistor T13, a switching transistor T14, and two diodes D15 and D16, and an N bridge arm including a switching transistor Tn1, a switching transistor Tn2, a switching transistor Tn3, a switching transistor Tn4, and two diodes Dn5 and Dn6. A midpoint of the main bridge arm is an output point of the main bridge arm, and an L wire may be led out from the output point of the main bridge arm. A midpoint of the N bridge arm is an output point of the N bridge arm, and an N wire may be led out from the output point of the N bridge arm. After the L wire and the N wire pass through an LCL filter circuit, a single-phase alternating current whose voltage changes in a form of a sine wave may be output. Similarly, FIG. 2b shows a three-phase three-level inverter circuit. Specifically, the three-phase three-level inverter circuit has three main bridge arms and no N bridge arm. Therefore, only three-phase alternating currents whose voltages change in a sine wave form and whose phase difference is 120° can be output. Still refer to FIG. 2c. The three-phase three-level inverter circuit has three main bridge arms and one N bridge arm. Therefore, the three-phase three-level inverter circuit can not only output three-phase alternating currents whose voltages change in a sine wave form and whose phase difference is 120°, but also output, between each main bridge arm and the N bridge arm, a single-phase alternating current whose voltage changes in a sine wave form.

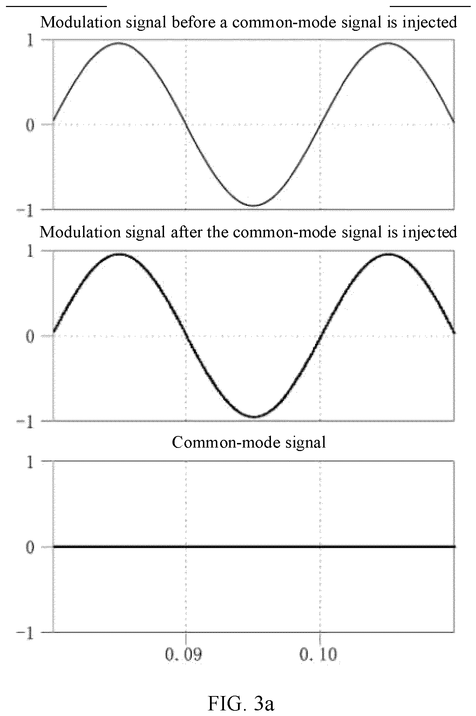

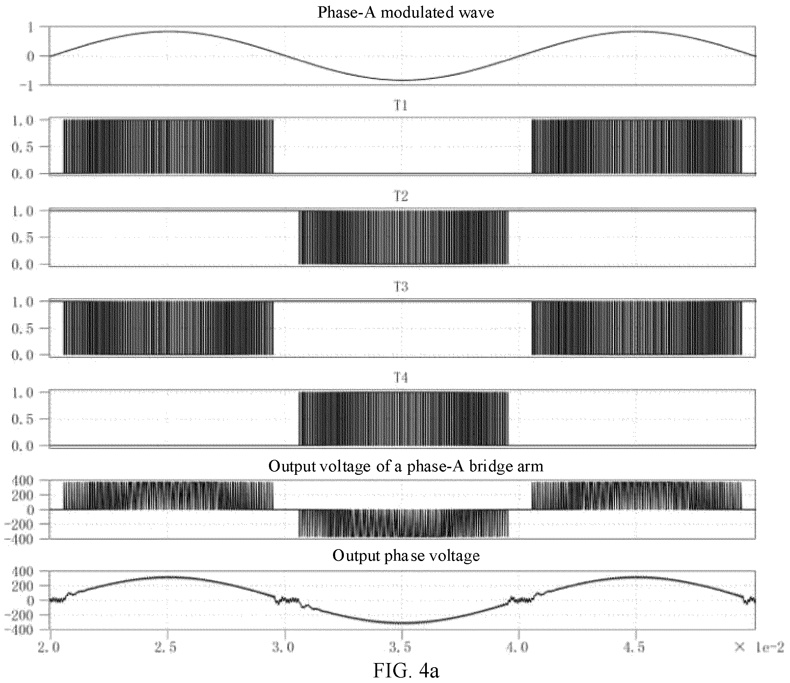

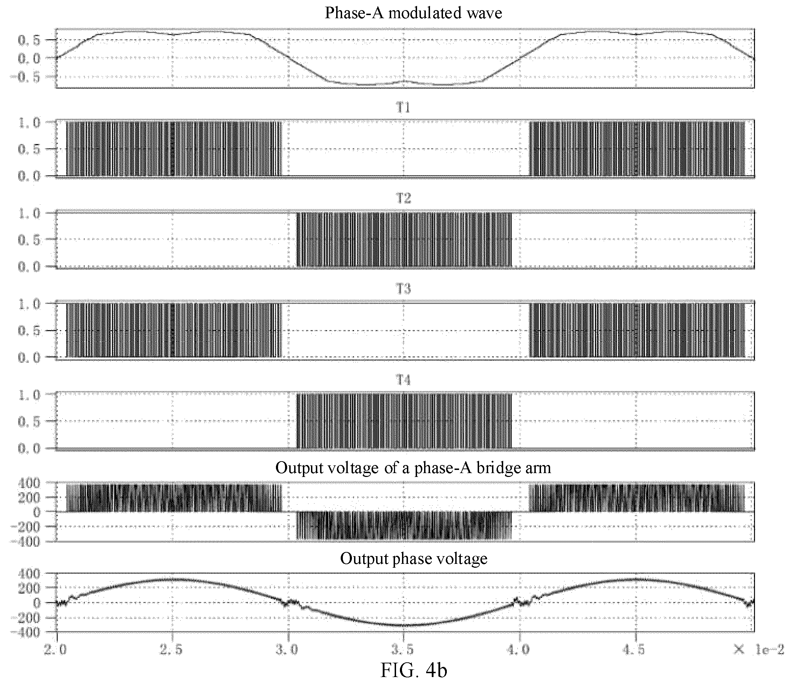

In the foregoing embodiment, the controller 110 inputs a modulation signal shown in FIG. 3a to the inverter circuit 120. Specifically, the controller 110 injects the modulation signal into each main bridge arm, to drive the switching transistor on the main bridge arm to be turned on or off. As shown in FIG. 3a, the modulation signal of the main bridge arm before a common-mode signal is input is a sinusoidal pulse width modulation (Sinusoidal Pulse Width Modulation, SPWM)signal in a sine wave form. Because a magnitude of the common-mode signal is always 0, after the common-mode signal is injected, the modulation signal of the main bridge arm remains unchanged (which is equivalent to that no common-mode signal is injected) and is still the SPWM signal, to drive the inverter bridge arm in the inverter circuit 120 to output an alternating current in a sine wave form. However, because the switching transistor in the inverter circuit 120 is limited by dead time and minimum on time, when the modulation signal is near a zero-crossing point (a point whose value is 0 in the modulation signal is referred to as a zero-crossing point of the modulation signal), that is, when an absolute value of the modulation signal is less than a specific threshold, for example, the threshold may be a first threshold 0.1, that is, when the modulation signal is less than 0.1 or greater than -0.1, a waveform of the output voltage is no longer a smooth sine curve, and the waveform of the entire output voltage becomes a sine curve that is distorted near the zero-crossing point. FIG. 4a is a diagram of a waveform of an alternating current voltage output by the inverter circuit 120, and a phase-A modulation wave is a modulation signal of any main bridge arm in any inverter circuit shown in FIG. 2a to FIG. 2c. Drive signals of T1 to T4 are drive signals of four switching transistors on the main bridge arm, an output voltage of a phase-A bridge arm is a pulse voltage output by four switching transistors whose actions are driven by the drive signals of T1 to T4 and that are on the corresponding main bridge arm, and an output phase voltage is in a waveform of an output voltage obtained by performing LC filtering on the pulse voltage output by the corresponding main bridge arm (meanings of elements in FIG. 4b and FIG. 4c, FIG. 5, and FIG. 8a to FIG. 8c are similar, and details are not described below). Near a zero-crossing point of the waveform of the output voltage, the output voltage "jitters". At other positions of the waveform of the output voltage, the waveform of the output voltage still presents a smooth sine curve.

It should be understood that a value of the threshold is determined based on a hardware characteristic of the switching transistor. For example, the switching transistor may use a semiconductor device such as a metal-oxide semiconductor field-effect transistor (Metal-Oxide Semiconductor Field-Effect Transistor, MOSFET) or an insulated gate bipolar transistor (Insulated Gate Bipolar Transistor, IGBT). MOSFETs or IGBTs of different models and MOSFETs or IGBTs manufactured by using different processes have different requirements on dead time and minimum on time.

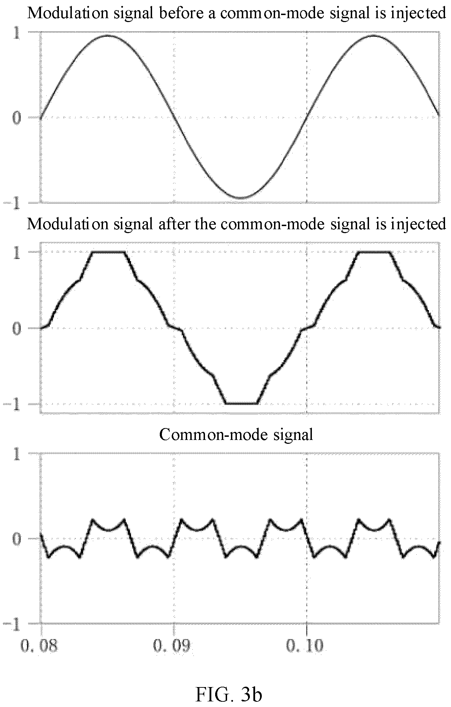

It should be understood that, in the foregoing embodiment, the controller 110 may output a discontinuous pulse width modulation (Discontinuous Pulse Width Modulation, DPWM) signal shown in FIG. 3b. The DPWM signal is obtained by superimposing a common-mode signal on the modulation signal of the main bridge arm before the common-mode signal is injected and an SPWM signal. Finally, the common-mode signal is injected to the modulation signal of the main bridge arm, to obtain the DPWM signal. It can be learned that the DPWM signal remains to be 1 or -1 for a continuous time period in one modulation period, so that in a time period in any modulation period of the modulation signal, the output voltage of the inverter bridge arm in the inverter circuit 120 is clamped at half of a direct current voltage received by the inverter circuit 120. In this time period, the switching transistor in the inverter circuit 120 is not turned on or off, and the inverter circuit 120 does not generate a loss in this time period, to improve energy conversion efficiency of the inverter circuit 120. The DPWM signal is obtained by superimposing the SPWM signal and the SPWM signal. It can be easily learned through comparison that a direction of the SPWM signal is opposite to a direction of the common-mode signal near the zero-crossing point. In other words, when the SPWM signal is greater than 0 near the zero-crossing point, the common-mode signal corresponding to the same moment is less than 0. When the SPWM signal is less than 0, the common-mode signal corresponding to the same moment is greater than 0. In this case, the DPWM signal is close to 0 for long time near the zero-crossing point, that is, time of the DPWM signal near the zero-crossing point is prolonged, that is, time in which an absolute value of the DPWM signal is less than 0.1 is prolonged. Consequently, the DPWM signal stays near the zero-crossing point for longer time, which affects quality of output electric energy. In this case, a waveform of the alternating current voltage output by the inverter circuit 120 is also more distorted. FIG. 4b is a diagram of the waveform of the alternating current voltage output by the inverter circuit 120. It can be learned that the waveform of the output voltage "jitters" after clamping switch, and the output voltage also "jitters" near the zero-crossing point of the waveform of the output voltage. At other positions of the waveform of the output voltage, the waveform of the output voltage still presents a smooth sine curve.

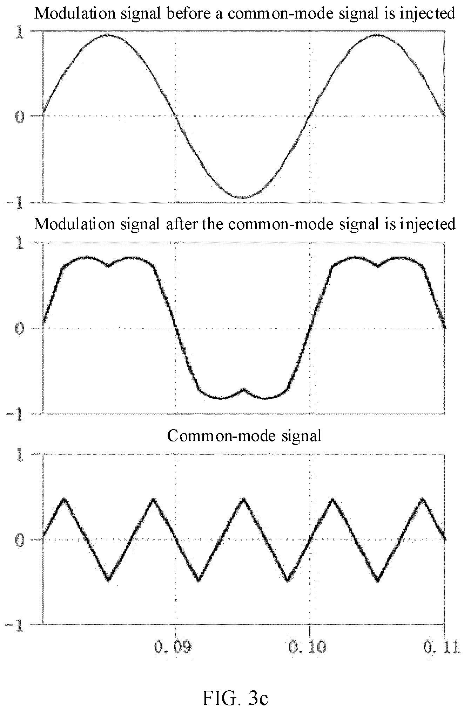

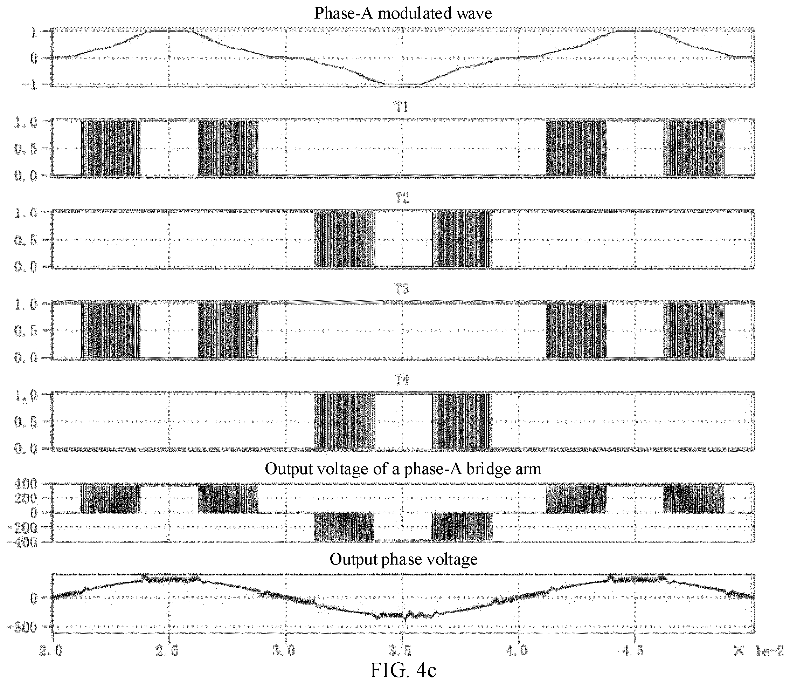

In addition, the controller 110 may also output an space vector pulse width modulation (Space Vector Pulse Width Modulation, SVPWM) signal shown in FIG. 3c. The SVPWM signal is obtained by superimposing a common-mode signal on the modulation signal of the main bridge arm before the common-mode signal is injected and an SPWM signal. Finally, the common-mode signal is injected to the modulation signal of the main bridge arm, to obtain the SVPWM signal. In this case, the waveform of the voltage output by the inverter circuit 120 still presents a smooth sine curve, and the SVPWM signal is obtained by superimposing the SPWM signal and the SPWM signal. It can be easily learned through comparison that the direction of the SPWM signal is the same as the direction of the common-mode signal near the zero-crossing point. In other words, when the SPWM signal is greater than 0 near the zero-crossing point, the common-mode signal corresponding to the same moment is greater than 0. When the SPWM signal is less than 0, the common-mode signal corresponding to the same moment is less than 0. In this way, the DPWM signal is close to 0 for shorter time near the zero-crossing point, and time of the SVPWM signal near the zero-crossing point is shortened, that is, time in which an absolute value of the SVPWM signal is less than 0.1 is shortened. Therefore, the SVPWM signal stays near the zero-crossing point for shorter time, which has little impact on quality of electric energy output by the inverter circuit 120. In this case, the waveform of the alternating current voltage output by the inverter circuit 120 is slightly distorted. FIG. 4c is a diagram of the waveform of the alternating current voltage output by the inverter circuit 120. Near the zero-crossing point of the waveform of the output voltage, the output voltage "jitters". At other positions of the waveform of the output voltage, the waveform of the output voltage still presents a smooth sine curve. Near the zero-crossing point of the waveform of the output voltage, the output voltage "jitters". In comparison with a waveform of an output voltage obtained through SPWM, a "jitter" range of a waveform of an output voltage obtained through SVPWM is narrower near the zero-crossing point. At other positions of the waveform of the output voltage, the waveform of the output voltage still presents a smooth sine curve.

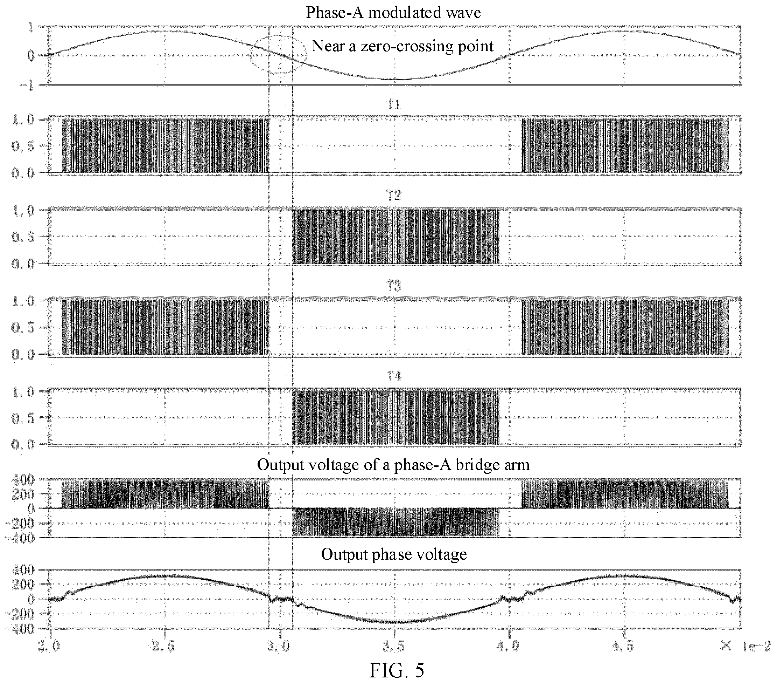

It should be understood that, under control of the foregoing various types of modulation signals, there may be two implementations: unipolar modulation and bipolar modulation. Refer to FIG. 5. In the three-phase inverter circuit, in the unipolar modulation scheme, the switching transistors T1 and T3 are complementarily turned on, the switching transistors T2 and T4 are complementarily turned on. When the switching transistors T1 and T3 operate, the switching transistors T2 and T4 on the bridge arm do not operate, the output voltage of the bridge arm remains to be positive, and the output phase voltage remains to be positive. When the switching transistors T2 and T4 operate, the switching transistors T1 and T3 do not operate, the output voltage of the bridge arm remains to be negative, and the output phase voltage remains to be negative. In the bipolar modulation scheme, the switching transistors T1, T2, T3, and T4 are all turned on or off, and the output voltage of the bridge arm alternates between positive and negative values. If the output phase voltage obtained through LC filtering is expected to be a positive value, switching transistor action duration is allocated between the switching transistors T1 and T3 and between the switching transistors T2 and T4, to increase action duration of the switching transistors T1 and T3. A negative value of the output voltage of the bridge arm is used to offset a part of the positive value. After LC filtering is performed, the output phase voltage may remain to be positive. The reverse is also true. Therefore, bipolar modulation can achieve same output effect as unipolar modulation. In the bipolar modulation scheme, some reactive power cancels each other, and a switching loss is large. Therefore, unipolar modulation is usually used to implement modulation control based on various modulation signals. The switching transistors T1 to T4 mentioned herein are switching transistors on any one of the main bridge arms in FIG. 2a to FIG. 2c in the foregoing embodiments. For example, the switching transistors T1 to T4 may be switching transistors T11, T12, T13, and T14 on the L bridge arm in FIG. 2a, or Ta1, Ta2, Ta3, and Ta4 on the bridge arm A1 in the inverter circuit in FIG. 2b or the bridge arm A in the inverter circuit in FIG. 2c.

In the foregoing embodiment, the controller 110 implements modulation control based on various modulation signals through unipolar modulation. When a modulation signal is small, a pulse provided by the modulation signal to the switching transistor is narrow. Consequently, limitations of dead time and minimum on time of the switching transistor are not met, modulation fails, and finally, the waveform of the output voltage is distorted. For example, when the modulation signal is small, it means that an expected output phase voltage is of a small value. If the modulation signal is of a small positive value, it is expected that action time of the switching transistors T1 and T3 is short. In this case, time provided for the switching transistors T1 and T3 to be turned on or off cannot meet the requirements of the dead time and the minimum on time of the switching transistors. Consequently, control on the switching transistors fails, and finally, the output phase voltage is distorted.

This application provides a technical solution. A modulation signal is output in a bipolar modulation signal near a zero-crossing point. This is equivalent to outputting a modulation signal in a form of a unipolar modulation signal, and distortion of a waveform of an output voltage can be avoided.

Still refer to FIG. 5. Distortion of the waveform of the output voltage near the zero-crossing point is analyzed in detail. For example, a modulation signal of one bridge arm is a phase-A modulation signal. Near a zero-crossing point, which may also be referred to as a zero-crossing interval, the modulation signal is approximately 0, and the four switching transistors T1, T2, T3, and T4 on the bridge arm are in an on or off state. However, because the switching transistors have dead time and minimum on time, the switching transistors T1, T2, T3, and T4 are not in an on or off state completely based on a control requirement, the switching transistors T1, T2, T3, and T4 cannot be turned on or off based on a requirement of the modulation signal, and a waveform of an output voltage presents a state different from a smooth sine curve waveform.

It should be understood that the inverter circuit 120 in the foregoing embodiments is a three-level inverter circuit, that is, an output end of each inverter bridge arm may output three levels. For the three-level inverter circuit, same modulation effect may be achieved through bipolar modulation that is equivalent to unipolar modulation, and distortion, of the waveform of the output voltage, caused by an excessively small modulation signal is avoided.

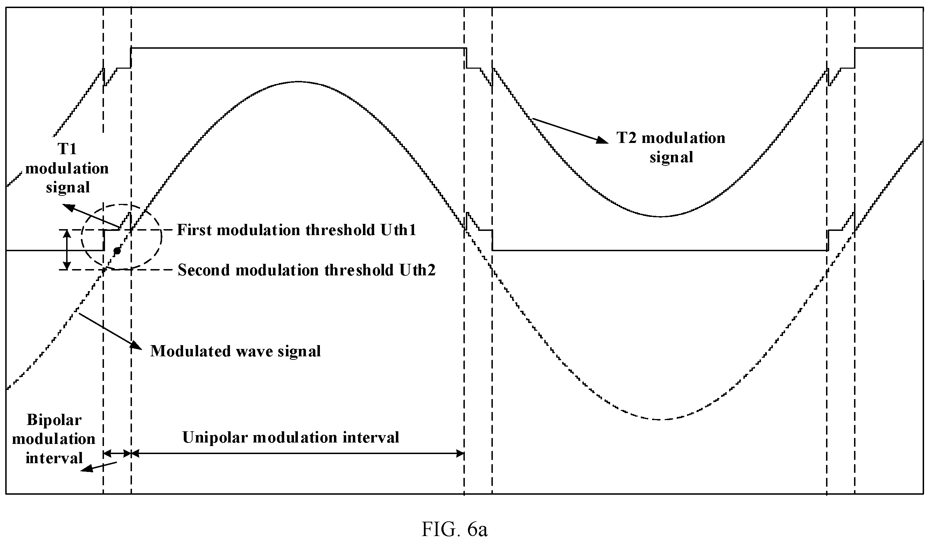

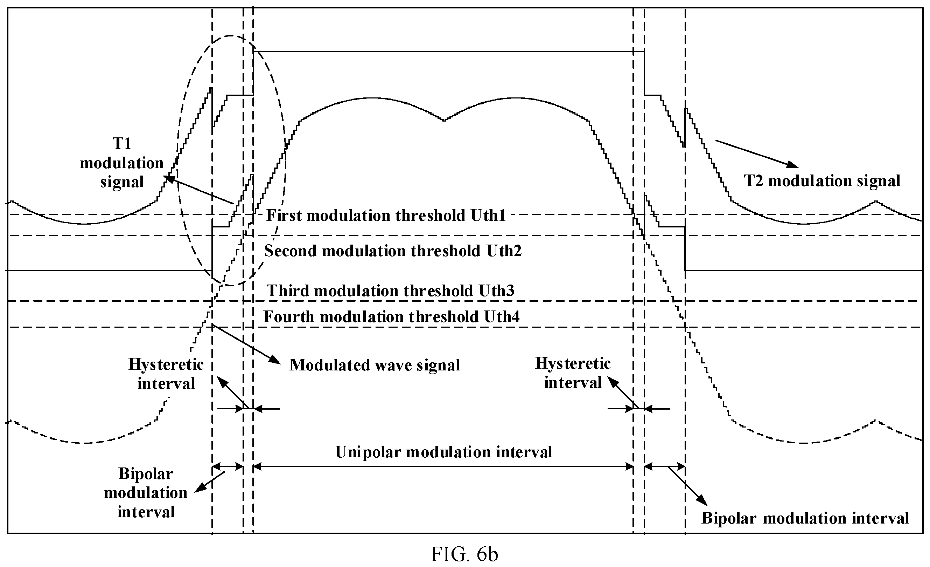

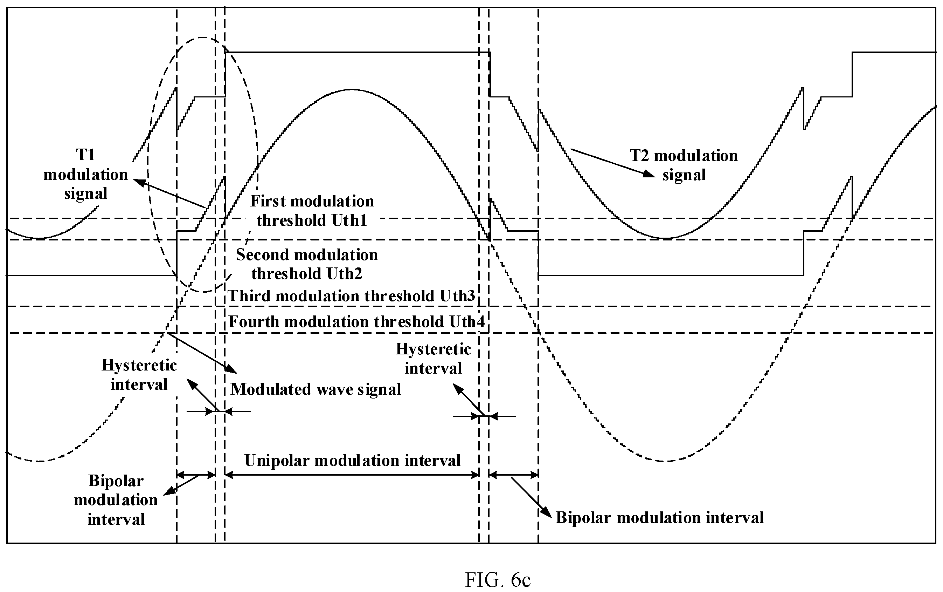

Specifically, FIG. 6a to FIG. 6c show modulation signals of the switching transistor T1 and the switching transistor T2 (modulation signals of the switching transistors T3 and T4 are derived based on a complementary relationship between the switching transistors T3 and T4 and the switching transistors T1 and T2). FIG. 6a shows an SPWM signal, FIG. 6b shows a DPWM signal, and FIG. 6c shows an SVPWM signal. In addition, hysteretic control is added to FIG. 6b and FIG. 6c. Refer to FIG. 6a. When an absolute value of the modulation signal is greater than a first threshold, unipolar modulation is performed. However, if unipolar modulation continues to be used to modulate the modulation signal whose absolute value is less than or equal to a second threshold, because the switching transistor T1 has minimum on time and dead time, the switching transistor T1 may not be effectively driven to be turned on or off due to the excessively small modulation signal, where the first threshold is equal to the second threshold. In this case, a bipolar modulation scheme is used. Based on the foregoing analysis, longer action time needs to be allocated to the switching transistor T1 near a zero-crossing point, and the switching transistor T2 is driven to perform an action together. In other words, a larger modulation signal needs to be given to the switching transistor T1 near the zero-crossing point, and a modulation signal of the switching transistor T2 that should be locked in a normally-on state by a modulation signal whose value is 1 is reduced, to control T2 to be turned on or off together. In this case, it is equivalent to that the modulation signal is boosted, so that the modulation signal is boosted to be greater than the first threshold, and the modulation signal is large enough to effectively drive the switching transistor T1 to be turned on or off. This can effectively avoid distortion of a waveform of an output voltage, and improve quality of electric energy output by the inverter circuit 120. Similarly, refer to the DPWM in FIG. 6b and the SVPWM in FIG. 6c. Unipolar modulation is performed when the modulation signal is greater than the first threshold, and bipolar modulation is performed when an absolute value of the modulation signal is less than or equal to the second threshold, where the first threshold is greater than the second threshold. A magnitude of the modulation signal is increased, to prevent a case in which the switching transistor cannot be effectively driven to be turned on or off due to an excessively small modulation signal. It should be noted that a value relationship between the first threshold and the second threshold in FIG. 6a to FIG. 6c is merely an example, and a value relationship between the first threshold and the second threshold may be learned from each other. For an implementation principle of bipolar modulation that is equivalent to unipolar modulation, refer to the following description:

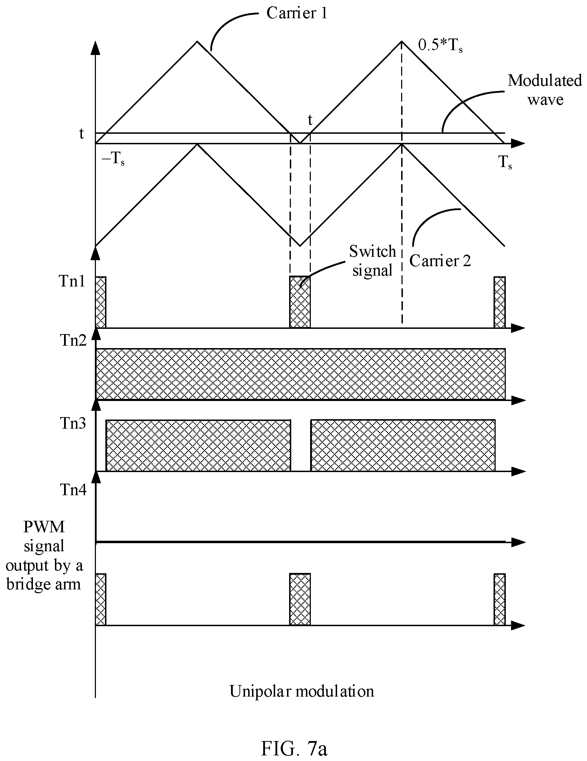

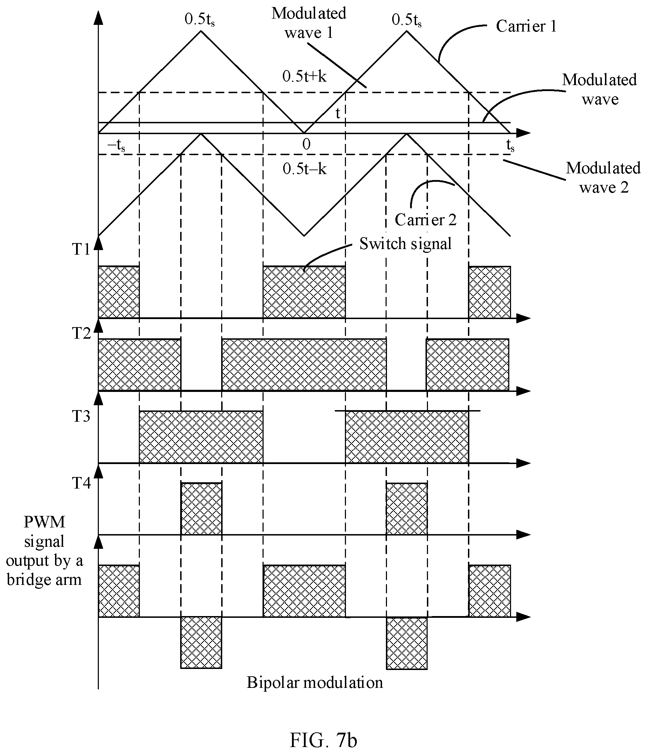

In a unipolar PWM signal, with reference to FIG. 7a and FIG. 7b, it is assumed that an instantaneous value of a modulated wave is t, a switching frequency is fs, and modulation periods of a carrier 1 and a carrier 2 are $T_s$. Waveforms of the carrier 1 and the carrier 2 are isosceles right triangles. The carrier 1 is used to control the switching transistor T1 and the switching transistor T3, and the carrier 2 is used to control the switching transistor T2 and the switching transistor T4.

The switching transistor T1 is used as an example. It can be learned that a pulse width $t_{on}$ for controlling, based on the modulated wave t, the switching transistor T1 (and controlling the switching transistor T3 to be turned off) to be turned on is:

$$t_{on} = \frac{t}{0.5t_s}$$

When $t_{on}$ < 10%, the PWM signal is limited by dead time and minimum on time of the switching transistor, resulting in a loss of the PWM signal.

A basic principle of a bipolar PWM scheme is shown in FIG. 7b. The bipolar PWM scheme uses a positive-negative alternating bipolar triangular carrier and a modulated wave, and the bipolar PWM signal may be directly obtained by comparing the triangular carrier and the modulated wave. Therefore, bipolar modulation in this application is characterized in that a positive level, a zero level, and a negative level exist in both a positive half period and a negative half period for modulation of an output voltage of a bridge arm. In other words, P, O, and N levels exist in each half modulation period. Modulation signal offset compensation can be flexibly performed by adjusting a bipolar coefficient.

A principle of bipolar PWM is as follows:

To resolve a narrow pulse, compensation processing is performed on the modulated wave t. k is a compensation value, a modulation signal of a compensated modulated wave 1 is 0.5t+k, and a modulation signal of a compensated modulated wave 2 is 0.5t-k. This is equivalent to that the modulated wave is split into the modulated wave 1 and the modulated wave 2. The modulated wave 1 is used to control the switching transistor T1 and the switching transistor T3, and the modulated wave 2 is used to control the switching transistor T2 and the switching transistor T4.

(1) Time of a 1 level is on time of the switching transistor T1 (off time of the switching transistor t3), and is equivalent to:

$$t_{1on} = t_{3off} = \frac{0.5t + k}{0.5t_s}$$

(2) Time of a -1 level is off time of the switching transistor T4 (on time of the switching transistor t2), and is equivalent to:

$$t_{2on} = t_{4off} = \frac{0.5t_s + 0.5t - k}{0.5t_s} \quad (0.5t - k < 0)$$

(3) It can be learned from (1) and (2) that equivalent level time is:

$$t_{on} = \frac{0.5t + k}{0.5t_s} - \left(1 - \frac{0.5t_s + 0.5t - k}{0.5t_s}\right) = \frac{0.5t + k}{0.5t_s} - 1 + \frac{0.5t_s + 0.5t - k}{0.5t_s} = \frac{t}{0.5t_s}$$

Alternatively, the following implementation may be performed:

(1) Time of a 1 level is on time of the switching transistor T1 (off time of the switching transistor T3), and is equivalent to:

$$t_{1on} = t_{3off} = \frac{t + k}{0.5t_s}$$

(2) Time of a -1 level is off time of the switching transistor T4 (on time of the switching transistor T2), and is equivalent to:

$$t_{2on} = t_{4off} = \frac{0.5t_s - k}{0.5t_s} \quad (k > 0)$$

(3) It can be learned from (1) and (2) that equivalent level time is:

$$t_{on} = \frac{t+k}{0.5t_s} - \left(1 - \frac{0.5t_s - k}{0.5t_s}\right) = \frac{t+k}{0.5t_s} - 1 + \frac{0.5t_s - k}{0.5t_s} = \frac{t}{0.5t_s}$$

It can be learned from the foregoing analysis that the modulation signal of the switching transistor can be compensated by adjusting a value of k, so that a narrow pulse is resolved and a result of the switching transistor is not affected. Obviously, in bipolar modulation, same technical effect as unipolar modulation can be achieved by dynamically adjusting distribution of t in combination with compensation of the value of k.

Based on the foregoing equivalent principle of unipolar modulation and bipolar modulation, bipolar modulation may be used when a modulation signal is small, to avoid a loss of the modulation signal and avoid distortion of a waveform of a voltage output by the inverter bridge arm.

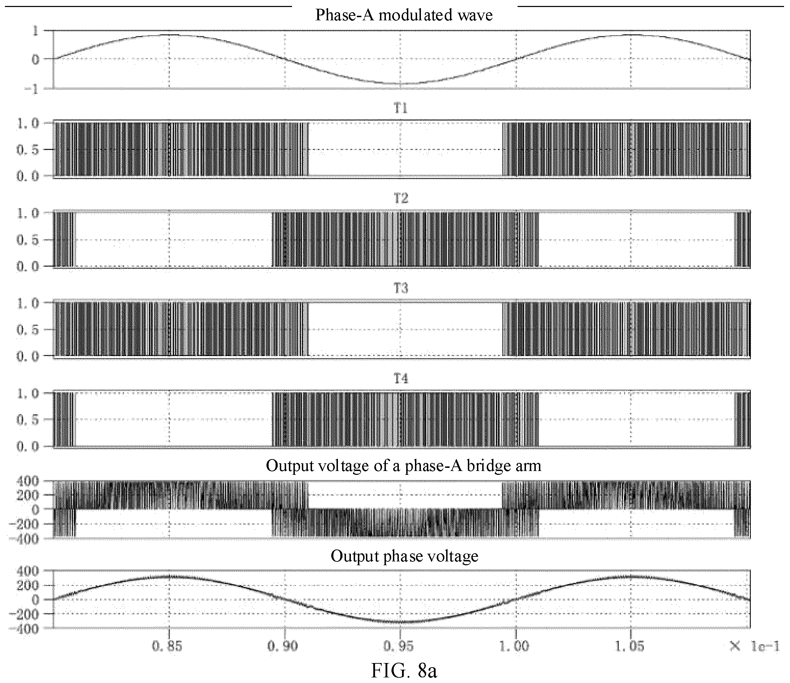

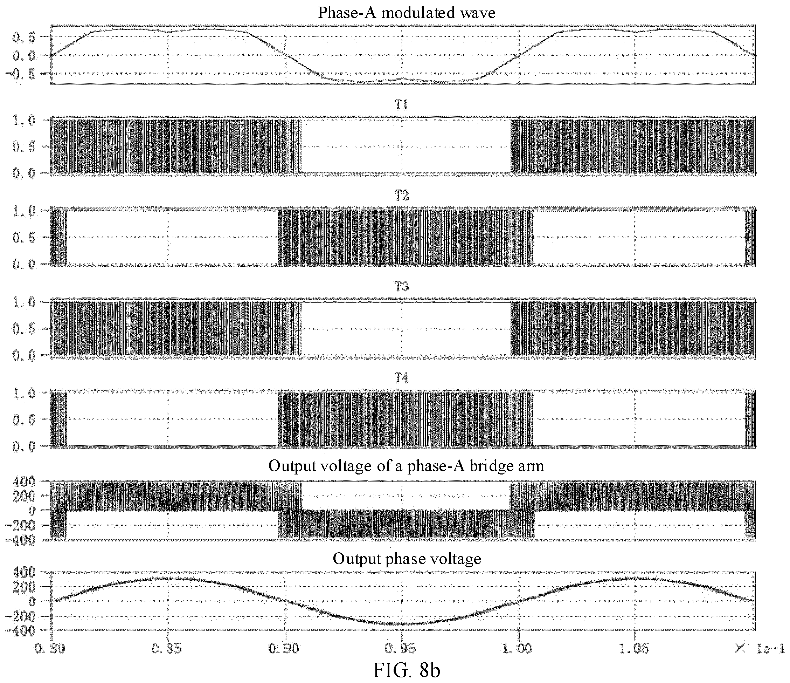

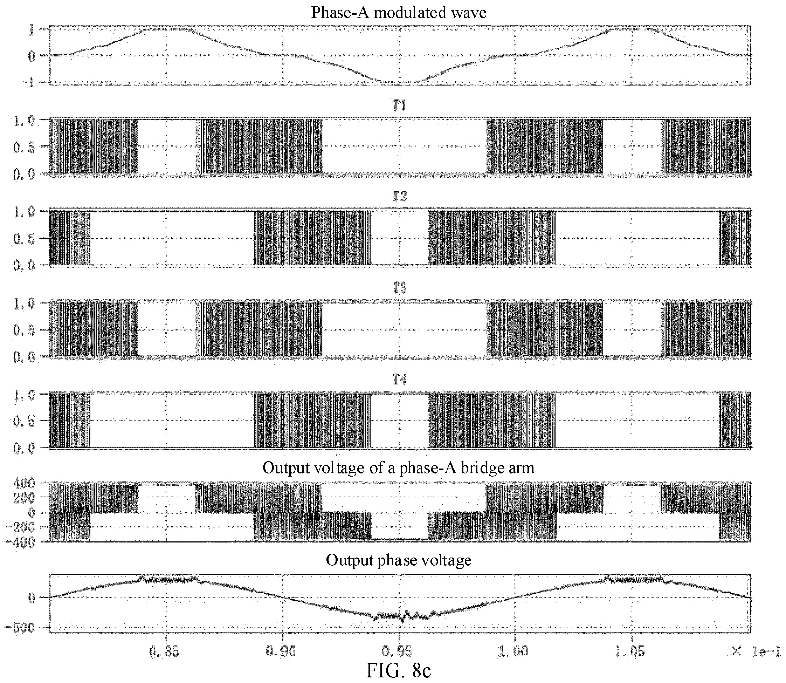

Refer to FIG. 8a to FIG. 8c. Bipolar modulation is used near the zero-crossing point of the modulation signal, the switching transistors T1 to T4 are turned on or off, the output voltage of the bridge arm alternates between a positive value and a negative value, and the waveform of the output phase voltage is significantly improved. Refer to FIG. 8a. In the SPWM scheme, the waveform of output voltage near the zero-crossing point hardly "jitters". Refer to FIG. 8b. In the DPWM scheme, the waveform of the output voltage "jitters" after clamping switch, and "jittering" near the zero-crossing point is significantly alleviated. Refer to FIG. 8c. In the SVPWM scheme, the waveform of the output voltage near the zero-crossing point hardly "jitters". It can be learned that, when the modulation signal is output near a zero-crossing point in a bipolar modulation scheme, distortion of the waveform of the output voltage near the zero-crossing point in various modulation schemes can be effectively alleviated.

If the first threshold is equal to the second threshold, bipolar modulation is used when the absolute value of the modulation signal is less than the first threshold, and unipolar modulation may be used in other cases. In an entire modulation period, either bipolar modulation or unipolar modulation is used.

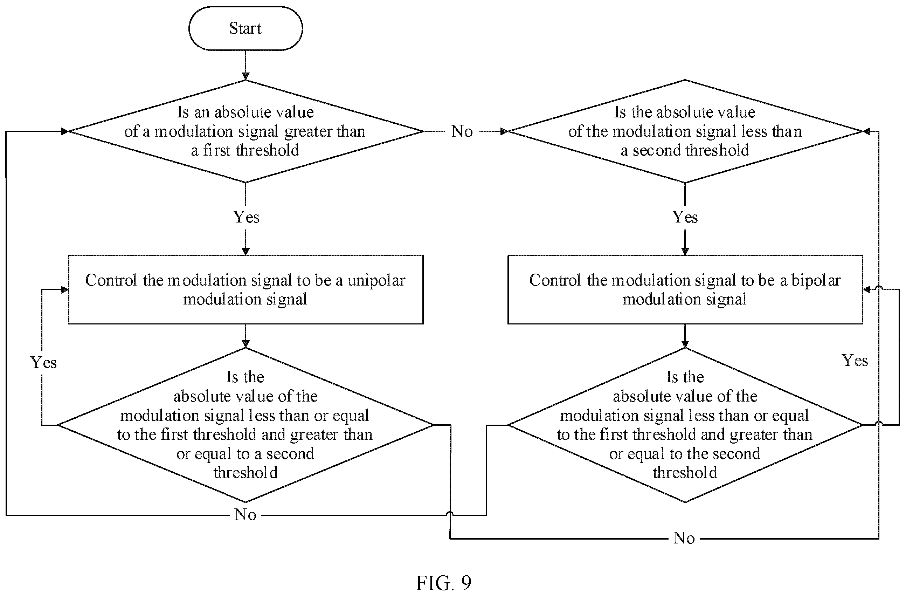

If the first threshold is greater than the second threshold, when the absolute value of the modulation signal is greater than the first threshold and less than the second threshold, a modulation scheme performed on the modulation signal may be flexibly selected. The examples in FIG. 6b to FIG. 6c further show hysteretic control during specific application. Specifically, the modulation period may be divided into three time periods. For example, in a first time period like a unipolar modulation interval in FIG. 6b or FIG. 6c, the absolute value of the modulation signal is greater than the first threshold. In a second time period like a hysteretic interval in FIG. 6b or FIG. 6c, the absolute value of the modulation signal is less than or equal to the first threshold and greater than or equal to the second threshold. In the third time period like a second bipolar modulation interval in FIG. 6b or FIG. 6c, the absolute value of the modulation signal is less than the second threshold. In this case, unipolar modulation is used in the second time period. Therefore, unipolar modulation may continue to be used in a time period in which a bipolar modulation condition is not met after unipolar modulation is performed, and does not need to be switched to the bipolar modulation scheme immediately. In another embodiment, the modulation period may also be divided into three time periods. In a first time period like a first bipolar modulation interval in FIG. 6b or FIG. 6c, the absolute value of the modulation signal is less than the second threshold. In a second time period like a hysteretic interval in FIG. 6b or FIG. 6c, the absolute value of the modulation signal is less than or equal to the first threshold and greater than or equal to the second threshold. In a third time period like a unipolar modulation interval in FIG. 6b or FIG. 6c, the absolute value of the modulation signal is greater than the first threshold. In this case, bipolar modulation is used in the second time period. Therefore, bipolar modulation may continue to be used in a time period in which a unipolar modulation condition is not met after bipolar modulation is performed, and does not need to be switched to the unipolar modulation scheme immediately. The control manner described in the foregoing two embodiments is hysteretic control. For a specific control procedure, refer to FIG. 9.

The foregoing disclosed embodiments of this application are merely intended to help describe this application. Preferred embodiments do not describe all details in detail, and this application is not limited to the specific implementations. Apparently, many modifications and changes may be made according to the content of embodiments of this application. These embodiments are selected and described in detail in this application, to better explain the principle and actual application of this application, so that a person skilled in the art can well understand and use this application. This application is limited only by the claims and their full scope and equivalents.

**Claims**

1. A power converter, comprising a controller and an inverter circuit, wherein the inverter circuit comprises at least two three-level inverter bridge arms, and the controller is configured to separately input modulation signals to the at least two three-level inverter bridge arms, so that the inverter circuit converts a received direct current into an alternating current and outputs the alternating current to a load;

when an absolute value of the modulation signal is greater than a first threshold, the modulation signal is a unipolar modulation signal; and

when the absolute value of the modulation signal is less than or equal to a second threshold, the modulation signal is a bipolar modulation signal, wherein

the first threshold is greater than or equal to the second threshold.

2. The power converter according to claim 1, wherein the first threshold is greater than the second threshold; and within any half modulation period of the modulation signal, if the absolute value of the modulation signal is greater than the first threshold in a first time period, and the absolute value of the modulation signal is less than or equal to the first threshold and greater than or equal to the second threshold in a second time period, the modulation signal is a unipolar modulation signal, wherein the second time period is a time period that is after the first time period and that is adjacent to the first time period; or

within any half modulation period of the modulation signal, if the absolute value of the modulation signal is less than the second threshold in a first time period, and the absolute value of the modulation signal is greater than or equal to the second threshold and less than or equal to the first threshold in a second time period, the modulation signal is a bipolar modulation signal, wherein the second time period is a time period that is after the first time period and that is adjacent to the first time period.

3. The power converter according to claim 1 or 2, wherein the modulation signal is an SPWM signal or an SVPWM signal.

4. The power converter according to claim 1 or 2, wherein the inverter circuit is a three-phase inverter circuit, and the modulation signal is a DPWM signal.

5. An inverter circuit control method, comprising: inputting a modulation signal to an inverter circuit, to control the inverter circuit to convert a received direct current into an alternating current and output the alternating current to a load;

when an absolute value of the modulation signal is greater than a first threshold, controlling the modulation signal to be a unipolar modulation signal; and

when the absolute value of the modulation signal is less than or equal to a second threshold, controlling the modulation signal to be a bipolar modulation signal, wherein

the first threshold is greater than or equal to the second threshold.

6. The inverter circuit control method according to claim 5, wherein the first threshold is greater than the second threshold; and

within any half modulation period of the modulation signal, if the absolute value of the modulation signal is greater than the first threshold in a first time period, and the absolute value of the modulation signal is less than or equal to the first threshold and greater than or equal to the second threshold in a second time period, the modulation signal is controlled to be a unipolar modulation signal, wherein the second time period is a time period that is after the first time period and that is adjacent to the first time period; or

within any half modulation period of the modulation signal, if the absolute value of the modulation signal is less than the second threshold in a first time period, and the absolute value of the modulation signal is greater than or equal to the second threshold and less than or equal to the first threshold in a second time period, the modulation signal is controlled to be a bipolar modulation signal, wherein the second time period is a time period that is after the first time period and that is adjacent to the first time period.

7. The inverter circuit control method according to claim 5 or 6, wherein the modulation signal is an SPWM signal or an SVPWM signal.

8. The inverter circuit control method according to claim 5 or 6, wherein the inverter circuit is a three-phase inverter circuit, and the modulation signal is a DPWM signal.

FIG. 1a

FIG. 1b

FIG. 1c

FIG. 2a

FIG. 2b

FIG. 2c

FIG. 3a

Modulation signal before a common-mode signal is injected

Modulation signal after the common-mode signal is injected

Common-mode signal

FIG. 3b

Modulation signal before a common-mode signal is injected

Modulation signal after the common-mode signal is injected

Common-mode signal

FIG. 3c

Phase-A modulated wave

T1

T2

T3

T4

Output voltage of a phase-A bridge arm

Output phase voltage

FIG. 4a

EP 4 633 032 A1

FIG. 4b

FIG. 4c

EP 4 633 032 A1

Phase-A modulated wave

Near a zero-crossing point

T1

T2

T3

T4

Output voltage of a phase-A bridge arm

Output phase voltage

FIG. 5

EP 4 633 032 A1

FIG. 6a

T2 modulation signal

Bipolar modulation interval

First modulation threshold Uth1

Second modulation threshold Uth2

Third modulation threshold Uth3

Fourth modulation threshold Uth4

Hysteretic interval

Unipolar modulation interval

Modulated wave signal

T1 modulation signal

Hysteretic interval

Bipolar modulation interval

FIG. 6b

FIG. 6c

EP 4 633 032 A1

FIG. 7a

FIG. 7b

FIG. 8a

Phase-A modulated wave

T1

T2

T3

T4

Output voltage of a phase-A bridge arm

Output phase voltage

FIG. 8b

Phase-A modulated wave

T1

T2

T3

T4

Output voltage of a phase-A bridge arm

Output phase voltage

FIG. 8c

```
                              ┌─────────────┐
                              │    Start    │
                              └──────┬──────┘
                                     │
                                     ▼
          ◄──────────────────╱              ╲              ╱              ╲──────────────────►
                            ╱  Is an absolute ╲            ╱ Is the absolute ╲
                           ╱ value of a modul- ╲──── No ──►╲  value of the    ╱
                            ╲ ation signal grea-╱           ╲ modulation signal╱
                             ╲ter than a first ╱             ╲less than a      ╱
                              ╲ threshold     ╱               ╲second threshold╱
                                  │                               │
                                 Yes                             Yes
                                  ▼                               ▼
                      ┌────────────────────┐         ┌────────────────────┐
                      │Control the modulat-│         │Control the modulat-│
                      │ion signal to be a  │         │ion signal to be a  │
                      │unipolar modulation │         │bipolar modulation  │
                      │signal              │         │signal              │
                      └──────────┬─────────┘         └──────────┬─────────┘
                                 │                              │
                                 ▼                              ▼
          Yes                 ╱      ╲                       ╱      ╲           Yes
                            ╱  Is the ╲                    ╱  Is the ╲
                           ╱absolute value╲               ╱absolute value╲
                          ╱of the modulation╲            ╱of the modulation╲
                          ╲signal less than or╱          ╲signal less than or╱
                           ╲equal to the first╱           ╲equal to the first╱
                            ╲threshold and    ╱            ╲threshold and    ╱
                             ╲greater than or ╱             ╲greater than or ╱
                              ╲equal to a     ╱              ╲equal to the   ╱
                               ╲second        ╱               ╲second        ╱
                                ╲threshold   ╱                 ╲threshold   ╱
                                    │                              │
                                    No                             No
```

FIG. 9

**EUROPEAN SEARCH REPORT**

Application Number

EP 25 16 9164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 543 204 B1 (HITACHI LTD [JP]) 22 May 1996 (1996-05-22) * abstract * * page 5, lines 46-54; figures 1, 4, 9, 10, 13, 14 * * page 9, lines 7-8 * * page 10, lines 15-33 * | 1-8 | INV. H02M7/487 H02M7/5395 H02M7/5387 H02M1/00 H02J3/38 ADD. H02M3/10 |
| X | JUNG JUN-HYUNG ET AL: "A Carrier-Based PWM Control Strategy for Three-Level NPC Inverter Based on Bootstrap Gate Drive Circuit", IEEE TRANSACTIONS ON POWER ELECTRONICS, INSTITUTE OF ELECTRICAL AND ELECTRONICS ENGINEERS, USA, vol. 35, no. 3, 1 March 2020 (2020-03-01), pages 2843-2860, XP011761796, ISSN: 0885-8993, DOI: 10.1109/TPEL.2019.2930088 [retrieved on 2019-12-19] * abstract; figures 2, 12, 13b * | 1-8 | |
| A | CN 117 856 648 A (HUAWEI DIGITAL POWER TECH CO LTD) 9 April 2024 (2024-04-09) * abstract; figures 4a, 4b, 5, 8 * | 1-8 | TECHNICAL FIELDS SEARCHED (IPC) H02M H02J |
| A | MUKHERJEE SARBANI ET AL: "An Improved Adjustable Modulation Strategy for Three-Level NPC Inverters Considering Dynamic Loading Applications", IEEE TRANSACTIONS ON INDUSTRY APPLICATIONS, IEEE SERVICE CENTER, PISCATAWAY, NJ, US, vol. 55, no. 4, 1 July 2019 (2019-07-01), pages 3915-3925, XP011733184, ISSN: 0093-9994, DOI: 10.1109/TIA.2019.2906135 [retrieved on 2019-07-01] * abstract; figures 1-5 * | 1-8 | |

The present search report has been drawn up for all claims

| Place of search | Date of completion of the search | Examiner |
|---|---|---|
| The Hague | 18 July 2025 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9164

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2025

| Patent document cited in search report | | Publication date | Patent family member(s) | | Publication date |
|---|---|---|---|---|---|
| EP 0543204 | B1 | 22-05-1996 | CN | 1077064 A | 06-10-1993 |
| | | | DE | 69210955 T2 | 21-11-1996 |
| | | | EP | 0543204 A2 | 26-05-1993 |
| | | | JP | 2765315 B2 | 11-06-1998 |
| | | | JP | H05146160 A | 11-06-1993 |
| | | | KR | 930011391 A | 24-06-1993 |
| | | | US | 5375050 A | 20-12-1994 |
| CN 117856648 | A | 09-04-2024 | NONE | | |

EPO FORM P0459

For more details about this annex : see Official Journal of the European Patent Office, No. 12/82